# EUROPÄISCHE PATENTSCHRIFT

(11) **EP 3 544 467 B1**
(45) Veröffentlichungstag und Bekanntmachung des Hinweises auf die Patenterteilung: **16.09.2020**
(21) Anmeldenummer: 17800543.5
(22) Anmeldetag: 17.11.2017
(51) Int. Cl.: A47B 88/90

(54) **SCHUBKASTEN**
DRAWER
TIROIR

(30) Priorität: 25.11.2016 DE 102016122824; 18.09.2017 DE 102017121597
(43) Veröffentlichungstag der Anmeldung: 02.10.2019
(73) Patentinhaber: Paul Hettich GmbH & Co. KG, 32278 Kirchlengern (DE)
(72) Erfinder: STAUFENBERG, Gerrit, 49084 Osnabrück (DE); BEUMLER, Sören, 32257 Bünde (DE); MERTINS, Stefan, 32257 Bünde (DE); SZLAPKA, Timo, 33739 Bielefeld (DE)
(74) Vertreter: Dantz, Jan Henning
(86) Internationale Anmeldenummer: PCT/EP2017/079642
(87) Internationale Veröffentlichungsnummer: WO 2018/095820

(56) Entgegenhaltungen:
- EP-A2- 0 865 745
- WO-A1-2008/028811

## Beschreibung

Die vorliegende Erfindung betrifft einen Schubkasten nach dem Oberbegriff des Anspruches 1.

Die DE 10 2014 000 822 A1 offenbart ein Verfahren zur Herstellung einer Zarge einer Schublade, bei dem ein Kunststoffmaterial zu einem Profilstrang extrudiert und abgeschnitten wird und anschließend mit einer Folie überzogen wird. Durch das Extrudieren kann die äußere Folie verstärkt werden, allerdings lässt sich die so hergestellte Seitenzarge schlecht an einer Frontblende oder einer Rückwand eines Schubkastens fixieren. Zudem lassen sich Extrusionsprofile nur mit gleichem Querschnitt herstellen, was die Funktionalität der Formgebung begrenzt.

Die EP 865 745 offenbart eine Schublade mit einer doppelwandigen Schubladenzarge, in der Profilteile aus Kunststoff aufgenommen sind, die die Schubladenzarge versteifen.

WO 2008/028811 offenbart einen Schubkasten, bei dem die Seitenzargen über Adapter gehalten sind, die in den Seitenzargen angeordent sind und diese mit einem Boden des Schubkastens verbinden.

Es ist daher Aufgabe der vorliegenden Erfindung, einen Schubkasten zu schaffen, der einfach herstellbar ist und einen flexiblen Aufbau einer Seitenzarge ermöglicht.

Diese Aufgabe wird mit einem Schubkasten mit den Merkmalen des Anspruches 1 gelöst.

Bei dem erfindungsgemäßen Schubkasten weist mindestens eine Seitenzarge, vorzugsweise beide Seitenzargen, eine dünnwandige Umhüllung auf, die durch einen inneren Kern abgestützt ist, wobei der innere Kern mindestens zwei Formteile aufweist, die formschlüssig aneinander gehalten sind. Der Einsatz von mindestens zwei Formteilen ermöglicht eine höhere Flexibilität hinsichtlich der Formgebung für den Kern als beim Extrusionsverfahren, so dass die Anbindung von Frontblende und/oder Rückwand erleichtert wird. Zudem kann der stabile Aufbau der Seitenzarge durch die formschlüssige Anordnung der mindestens zwei Formteile gewährleistet werden.

Vorzugsweise weist der innere Kern mindestens drei Formteile auf, die formschlüssig aneinander gehalten sind. Dabei können mindestens drei unterschiedliche Formteile vorgesehen sein, die nicht baugleich ausgeführt sind.

Die Formteile erstrecken sich vorzugsweise über die gesamte Länge der Umhüllung, so dass eine gute Abstützung der Umhüllung erfolgt.

In einer bevorzugten Ausgestaltung ist ein erstes Formteil mit Befestigungsmitteln zur Fixierung der Frontblende versehen. Die Frontblende kann beispielsweise Öffnungen aufweisen, in die jeweils ein Zapfen eingefügt ist. Auch andere Befestigungsmittel für die Frontblende, beispielsweise Schraubverbindungen, können vorgesehen werden.

Ein zweites Formteil weist vorzugsweise Befestigungsmittel für die Rückwand auf. Das zweite Formteil kann beispielsweise winkelförmig ausgebildet sein und mit einem Steg eine Anlagefläche für die Rückwand ausbilden. Zwischen dem ersten Formteil und dem zweiten Formteil können dann ein oder mehrere dritte Formteile vorgesehen sein, die das erste Formteil mit dem zweiten Formteil verbinden. Die Anzahl der Formteile kann dabei weitgehend frei gewählt werden, je nach Länge des Schubkastens. Die Formteile lassen sich dabei kostengünstig als Spritzgussteile herstellen, die beispielsweise über Nut-Feder-Verbindungen ineinander steckbar sind.

Für eine stabile Fixierung der Umhüllung kann diese mit den Formteilen verklebt sein. Die Formteile können dabei im Wesentlichen plattenförmig ausgebildet sein und einen seitlich hervorstehenden Steg als Auflage für den Boden aufweisen. Die Umhüllung muss dabei nicht geschlossen ausgebildet sein, sondern kann eine Öffnung zur Durchführung des Bodens aufweisen, der in die Umhüllung randseitig eingreift.

Die Umhüllung ist vorzugsweise aus einem oder mehreren Metallblechen gebildet. Durch die Abstützung durch den Kern kann die Dicke der Metallbleche kleiner als 0,8 mm, insbesondere kleiner als 0,5 mm, sein.

Die Formteile bestehen vorzugsweise aus Kunststoff, wobei zur Verstärkung ein formstabiles Material, insbesondere aus Metall oder Kunststoff, vorgesehen sein kann, das an oder in den Formteilen fixiert ist. Für einen filigranen Aufbau kann die gesamte Seitenzarge eine Dicke von weniger als 10 mm, insbesondere weniger als 8 mm, aufweisen. Optional kann die Umhüllung auch einzelne Elemente aus anderen Materialien aufweisen, beispielsweise aus Holz, um optisch ansprechend ausgestaltet zu sein.

Die Umhüllung kann vorzugsweise ohne Schweißen montiert werden, insbesondere nur durch Verkleben der gebogenen Metallbleche. Durch die Ausfüllung der Umhüllung mit einem Kern bildet die Seitenzarge einen geringeren Klangkörper als ein Hohlprofil aus, so dass auch Geräusche beim Bewegen des Schubkastens gedämpft werden.

Die Funktionalität der Seitenzarge kann gemäß einer bevorzugten Ausführungsform verbessert werden, wenn der innere Kern mit Formteilen aus unterschiedlichen Höhen in vertikaler Ausrichtung zur Seitenzargenlängsrichtung ausgebildet ist. Die sich durch die unterschiedlichen Höhen der Formteile im inneren Kern ergebenden Freiräume können beispielsweise durch mindestens ein Wandelement aus Glas oder einem anderen optisch ansprechenden Material ausgefüllt sein, beispielsweise gefärbtem, transparenten oder transluzenten Glas, Holz oder Naturstein. Optional ist es zudem möglich, an oder in den Formteilen der Seitenzarge einen Lichtleiter oder Leuchtmittel, vorzugsweise LED, vorzusehen.

Erfindungsgemäß ist an mindestens einem Formteil eine Nut zur Aufnahme eines Bodens des Schubkastens ausgebildet. Für eine stabile Fixierung des Bodens kann in der Nut eine Aufnahme mit einer Kralle aus metallischem Material zur Fixierung des Bodens vorgesehen sein. Der Boden kann dann durch Einschieben in die Nut kraftschlüssig fixiert werden, wobei die Kralle sich vorzugsweise an einer Unterseite des Bodens in den Boden eingräbt.

In einer weiteren Ausgestaltung umfasst ein endseitig angeordnetes Formteil, das benachbart zu der Frontblende oder der Rückwand angeordnet ist, eine Aufnahme, in die ein Befestigungselement zur Fixierung der Frontblende oder der Rückwand eingefügt ist. Das Befestigungselement kann dabei relativ zu dem Formteil über einen Verstellmechanismus verschiebbar oder verschwenkbar gelagert sein, so dass über ein Verstellen des Befestigungselementes die Frontblende oder die Rückwand ausgerichtet werden kann. Dabei kann der Verstellmechanismus sowohl zur Tiefenverstellung oder Neigungsverstellung, als auch zur Höhen- oder Seitenverstellung eingesetzt werden. Die Einfügung des Befestigungselementes kann dabei abhängig von der Einbausituation sein, so dass mit ein und demselben Formteil je nach Einsatz eines Befestigungselementes eine unterschiedliche Funktionalität erhalten wird.

Die Erfindung wird nachfolgend anhand mehrerer Ausführungsbeispiele mit Bezug auf die beigefügten Zeichnungen näher erläutert. Es zeigen:

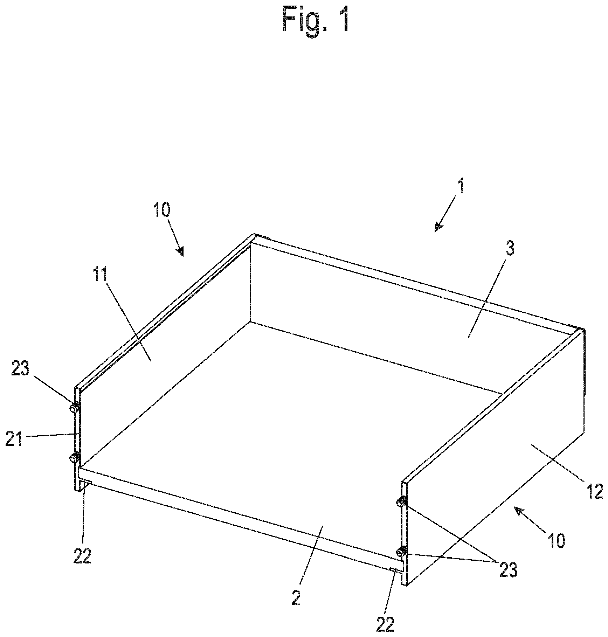

Figur 1 eine perspektivische Ansicht eines erfindungsgemäßen Schubkastens;
Figur 2 eine Explosionsdarstellung einer Seitenzarge des Schubkastens der Figur 1;
Figuren 3A und 3B zwei Vorderansichten der Seitenzarge der Figur 2;
Figur 4 eine Ansicht des Kerns der Seitenzarge der Figur 2;
Figur 5 eine perspektivische Explosionsdarstellung eines zweiten Ausführungsbeispiels einer erfindungsgemäßen Seitenzarge;
Figur 6 eine Ansicht des Kerns der Seitenzarge der Figur 5;
Figuren 7A und 7B mehrere schematische Ansichten von nicht erfindungsgemäßen Seitenzargen mit einer unterschiedlichen Umhüllung;
Figuren 7C bis 7E mehrere schematische Ansichten von erfindungsgemäßen Seitenzargen mit einer unterschiedlichen Umhüllung;
Figuren 8A bis 8C mehrere Ansichten eines weiteren Ausführungsbeispiels einer Seitenzarge;
Figuren 9A und 9B zwei Ansichten der Seitenzarge der Figur 8 bei der Montage;
Figuren 10A und 10B zwei Ansichten eines weiteren Ausführungsbeispiels einer modifizierten Seitenzarge;
Figuren 11A und 11B zwei Ansichten einer modifizierten Seitenzarge;
Figuren 12A und 12B zwei Detailansichten der Seitenzarge der Figur 11B;
Figuren 13A und 13 B zwei Ansichten eines modifizierten Formteils für eine Seitenzarge;
Figur 14 eine perspektivische Ansicht einer modifizierten Seitenzarge eines erfindungsgemäßen Schubkastens;
Figur 15 eine Explosionsdarstellung der Seitenzarge der Figur 14;

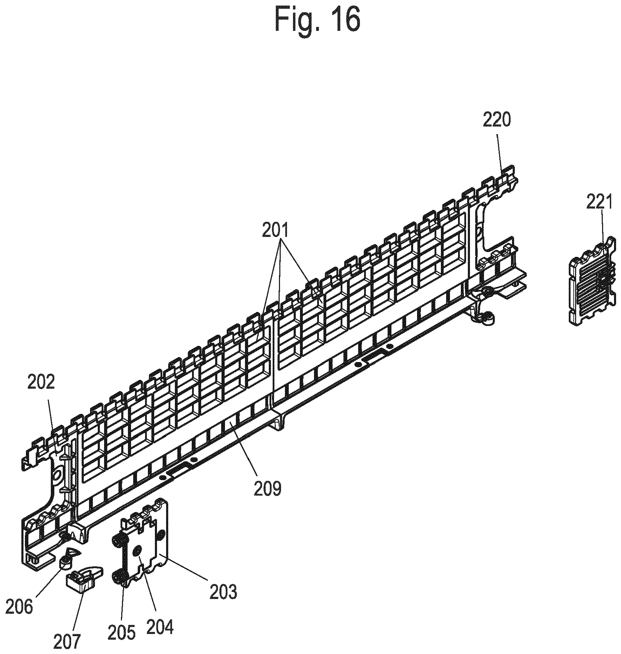

Figur 16 eine perspektivische Explosionsdarstellung der Seitenzarge der Figur 15 ohne Umhüllung;
Figur 17 eine Detailansicht des zur Frontblende benachbarten Formteiles mit einem Befestigungselement;
Figur 18 eine perspektivische Ansicht des Formteils der Figur 17 ohne Befestigungselement;
Figur 19 eine perspektivische Ansicht des Befestigungselementes;
Figur 20 eine perspektivische Ansicht des Formteils mit einem modifizierten Befestigungselement;
Figur 21 eine perspektivische Ansicht eines modifizierten Formteils mit zwei Befestigungselementen,
Figur 22 eine Ansicht des Formteils der Figur 21 mit modifizierten Befestigungselementen, und
Figur 23 eine perspektivische Ansicht des Formteils der Figur 21 mit modifizierten Befestigungselementen.

Ein Schubkasten 1, insbesondere für ein Möbel oder ein Haushaltsgerät, umfasst einen Boden 2, von dem rückseitig eine Rückwand 3 hervorsteht, die auf gegenüberliegenden Seiten mit zwei Seitenzargen 10 verbunden ist. Die Seitenzargen 10 verbinden die Rückwand 3 mit einer nicht dargestellten plattenförmigen Frontblende, die eine Vorderseite des Schubkastens 1 abdeckt. Die Frontblende wird dabei an Zapfen 23 fixiert, die von den Seitenzargen 10 hervorstehen, die in entsprechende Öffnungen an der Frontblende eingefügt und optional verklebt werden können.

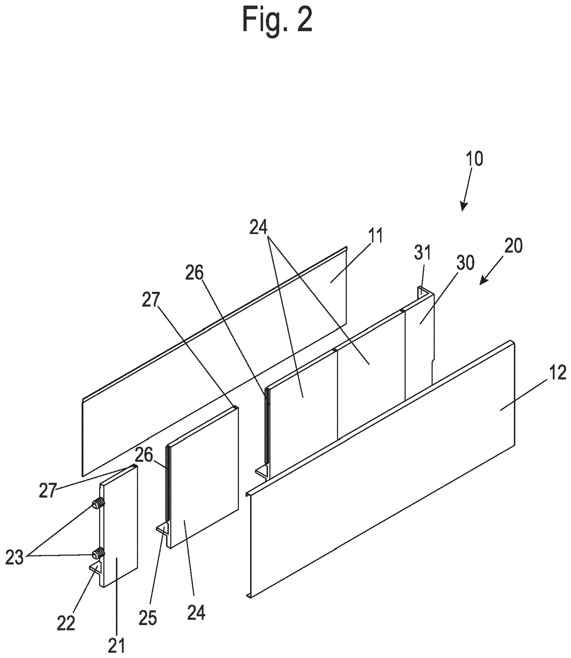

Die Ausgestaltung einer Seitenzarge 10 ist in Figur 2 im Detail gezeigt, wobei die gegenüberliegende Seitenzarge 10 spiegelbildlich ausgebildet ist und den gleichen Aufbau besitzt. Jede Seitenzarge 10 umfasst eine Umhüllung, die aus zwei Metallblechen 11 und 12 hergestellt ist, die einen inneren Hohlraum umgeben, der durch einen Kern 20 ausgefüllt ist. Der Kern 20 ist aus mehreren Formteilen 21, 24 und 30 gebildet, die formschlüssig aneinander gehalten sind.

Ein erstes Formteil 21 dient zur Fixierung der Frontblende und umfasst zwei hervorstehenden Zapfen 23 an einer Stirnseite. Das Formteil 21 ist im Wesentlichen plattenförmig ausgebildet und weist einen nach innen hervorstehenden Steg 22 zum Abstützen des Bodens 2 auf. Auf der zu den Zapfen 23 gegenüberliegenden Seite ist eine Nut 27 ausgebildet, in die eine stegförmige Feder 26 eines benachbarten Formteils 24 eingreift. Das Formteil 24 weist ebenfalls einen nach innen gerichteten Steg 25 zum Abstützen des Bodens 2 auf.

Ein weiteres Formteil 30 ist rückseitig vorgesehen, das winkelförmig ausgebildet ist und einen Steg 31 aufweist, der parallel zur Ebene der Rückwand 3 ausgerichtet ist. Der Steg 31 umgreift die Rückwand 3 und kann mit dieser verbunden sein, beispielsweise über Schrauben. Das Formteil 30 weist einen weiteren Abschnitt auf, der zu den benachbarten Formteilen 24 fluchtet. Zwischen dem vorderen Formteil 21 und dem rückwärtigen Formteil 30 sind dabei mehrere mittlere Formteile 24 mit gleicher Formgebung angeordnet, beispielsweise zwischen zwei und acht Formteilen, je nach Länge der Seitenzarge 10.

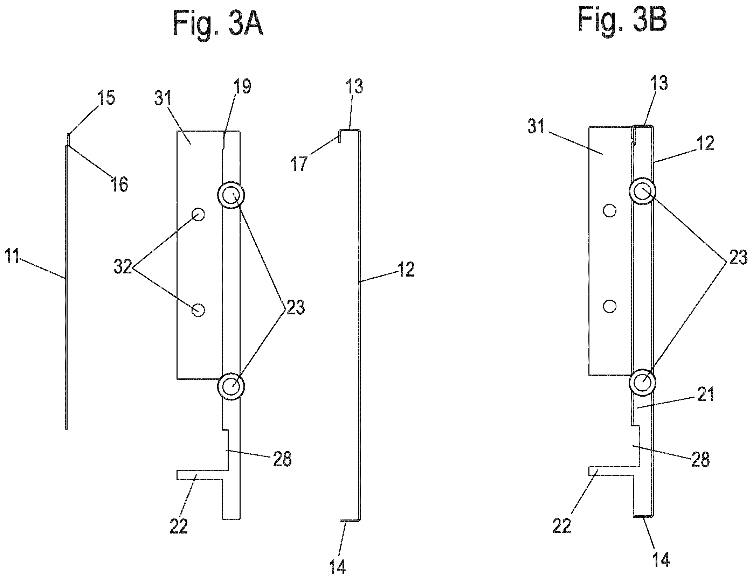

In den Figuren 3A und 3B ist die Seitenzarge der Figur 2 in einer Vorderansicht gezeigt. Die Umhüllung umfasst ein erstes dünnwandiges Metallblech 11 und ein zweites dünnwandiges Metallblech 12, die eine Dicke von kleiner 0,8 mm, insbesondere kleiner 0,5 mm, aufweisen können, beispielsweise zwischen 0,3 mm und 0,5 mm. Das Metallblech 12 weist eine obere Kante 13 auf, die mit einem nach unten abgewinkelten Steg 17 verbunden ist, so dass eine U-förmige obere Kante gebogen ist. Im unteren Bereich ist das ansonsten plattenförmige Metallblech 12 mit einer Abwinklung 14 versehen. Das Metallblech 11 ist im Wesentlichen plattenförmig ausgebildet und umfasst im oberen Bereich eine Stufe 16, an die sich ein Steg 15 anschließt, der sich parallel zu dem Metallblech 11 erstreckt.

Die Montage der Seitenzarge 10 kann so erfolgen, dass zunächst der Kern 20 zusammengesetzt wird und anschließend das Metallblech 12 mit dem Kern 20 verklebt wird. Ferner wird das Metallblech 11 in den Zwischenraum zwischen dem Steg 17 und einer Wand des Kerns 20 eingefügt, und das Metallblech 11 wird ebenfalls mit dem Kern 20 verklebt. Die so gebildete Einheit kann dann mit der Rückwand 3, der Frontblende und dem Boden 2 zu einem Schubkasten zusammengesetzt werden. Zur Montage der Rückwand sind Öffnungen 32 in dem Steg 31 ausgespart, in die Schrauben eingedreht werden können.

Für den Boden 2 ist an den Formteilen 21, 24 und 30 neben den Stegen 22 eine nutförmige Aufnahme 28 ausgebildet, in die eine Seitenkante des Bodens 2 einfügbar ist, so dass diese auch gegen Anheben gesichert ist. Wie insbesondere in Figur 3B erkennbar ist, umgibt die Umhüllung mit den Metallblechen 11 und 12 den Kern 20 nicht vollständig, sondern ein Teilbereich für den Boden 2 und ein Bereich unterhalb der Stege 22 ist nicht umhüllt, da dieser in der Regel nicht sichtbar ist.

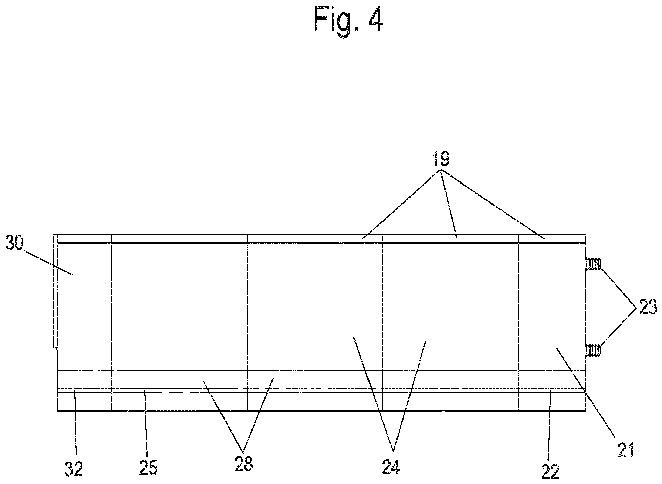

In Figur 4 ist ein zusammengesetzter Kern aus den Formteilen 21, 24 und 30 gezeigt. Die Formteile 21, 24 und 30 bilden an einer Oberkante eine Aussparung 19 aus, in die der obere Steg 15 mit der Stufe 16 des Metallbleches 11 eingefügt werden kann, so dass auch das Metallblech 11 formschlüssig an dem Kern 20 festgelegt ist.

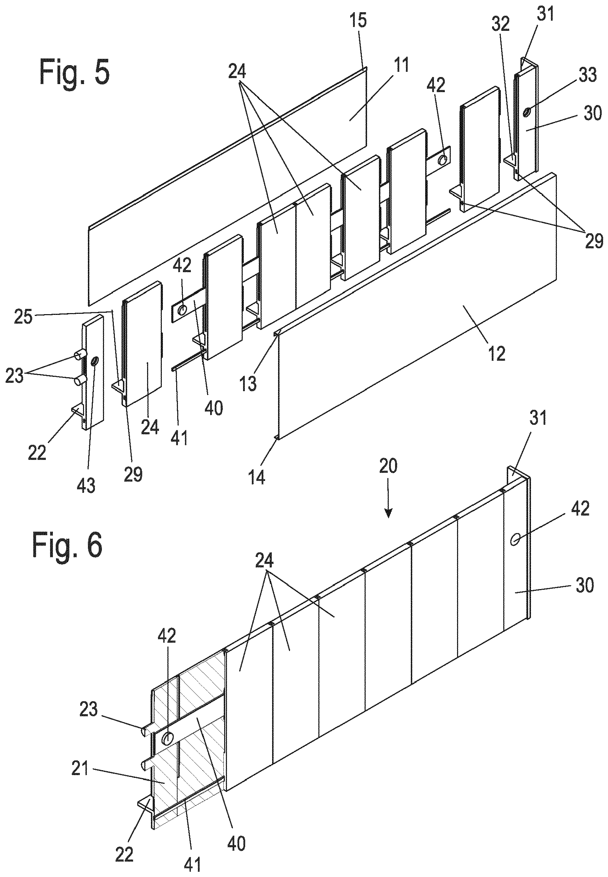

In Figur 5 ist ein weiteres Ausführungsbeispiel einer Seitenzarge gezeigt, die ähnlich wie in Figur 2 ausgebildet ist, allerdings weisen die Formteile 21, 24 und 30 eine Durchführung oder mehrere Durchführungen für Verstärkungselemente 40 und 41 auf. Ein erstes Band oder streifenförmiges Verstärkungselement 40, beispielsweise aus einem Stahlblech oder aus einem harten Kunststoff, durchgreift die mittleren Formteile 24 und weist endseitig jeweils einen Vorsprung 42 oder eine Ausnehmung mit darin eingestecktem Stift oder Bolzen auf, der in eine Öffnung 43 des vorderen Formteils 21 und eine Öffnung 33 des rückseitigen Formteils 30 einfügbar ist. Durch das bandförmige Verstärkungselement 40 kann die Seitenstabilität und die Belastbarkeit des Kerns auf Zug erhöht werden. Zudem ist im unteren Bereich ein stabförmiges Verstärkungselement 41 durch Öffnungen 29 in den Formteilen 21, 24 und 30 durchgeführt, das beispielsweise in den Öffnungen 29 verklebt ist. Auch andere mechanische Fixierungen für das Verstärkungsteil 41 können vorgesehen werden.

In Figur 6 ist der zusammengesetzte Kern 20 mit den Verstärkungselementen 40 und 41 gezeigt, die zur Stabilisierung der miteinander verbundenen Formteile 21, 24 und 30 beitragen. Im Übrigen ist dieses Ausführungsbeispiel so ausgebildet wie das erste Ausführungsbeispiel.

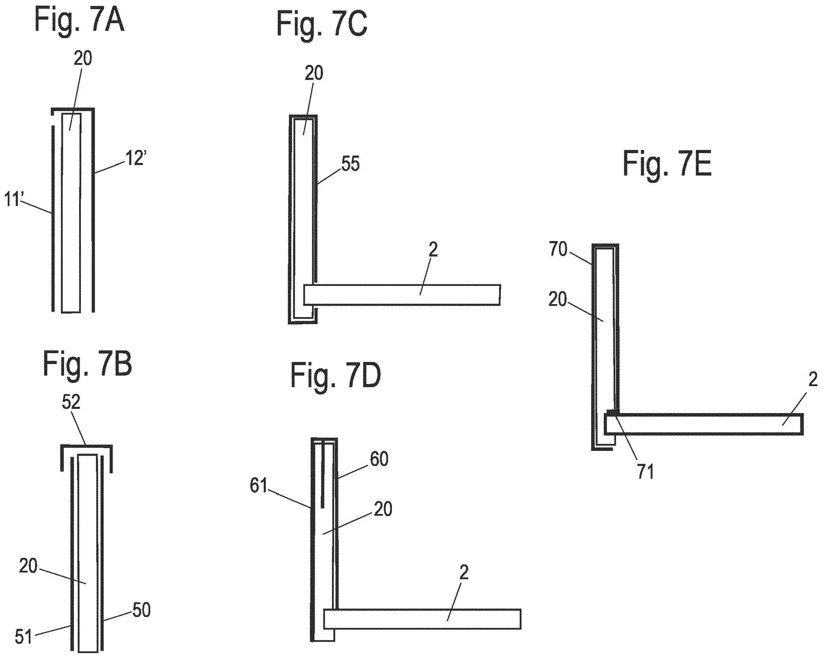

In den Figuren 7A bis 7F sind verschiedene Varianten für eine Umhüllung eines Kerns 20 gezeigt, der nur noch schematisch dargestellt ist und so ausgebildet sein kann, wie dies in den Figuren 2 oder 5 gezeigt ist.

In Figur 7A ist ein nicht erfindungsgemäßes plattenförmiges Metallblech 11' gezeigt, das mit dem Kern 20 verklebt ist, und ein zweites Metallblech 12' ist im oberen Bereich U-förmig verbogen und ebenfalls mit den Kern 20 verklebt. Es wurde auf die Stufe 16 bei dem Metallblech und die Abwinklung 14 bei dem Metallblech verzichtet.

Bei dem in Figur 7B gezeigten, nicht erfindungsgemäßen, Ausführungsbeispiel ist die Umhüllung aus drei Teilen gebildet, nämlich zwei plattenförmigen Metallblechen 50 und 51, die in oberen Bereich durch ein U-förmiges Profil 52 überdeckt sind, das mit den beiden Schenkeln die Außenwände der Metallbleche 50 und 51 übergreift.

In Figur 7C ist eine Variante gezeigt, bei der der Kern 20 durch eine einteilige Umhüllung 55 überdeckt ist, die entsprechend dem Kern gebogen ist, wobei eine Aussparung zur Durchführung des Bodens 2 weggelassen wurde.

In Figur 7D ist die Umhüllung durch zwei Metallbleche 60 und 61 gebildet, die an der Innenseite und Außenseite plattenförmig ausgebildet sind und im oberen Bereich U-förmig gebogen sind, wobei in dem Verbindungsbereich der Schenkel in eine nutförmige Aufnahme in dem Kern 20 eingreift. Dadurch kann die Stabilität der Einheit aus Umhüllung und Kern 20 erhöht werden, insbesondere wenn auch die in den Kern 20 eingreifenden Schenkel mit dem Kern 20 verklebt sind.

In einem in Figur 7E gezeigten Ausführungsbeispiel ist die Umhüllung 70 wieder einteilig ausgebildet, ähnlich wie in Figur 7C, allerdings ist oberhalb des Schubkastens1 eine Abwinklung 71 vorgesehen, die auf dem Boden 2 aufliegt, so dass kein Spalt zwischen der Oberseite des Bodens 2 und der Umhüllung sichtbar ist.

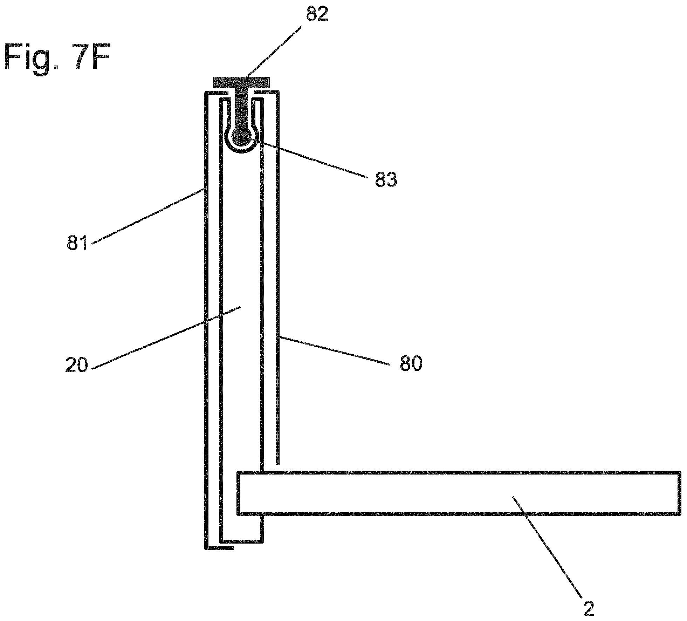

Die Figur 7F zeigt ein Ausführungsbeispiel einer Umhüllung mit einer Innenwand 80 und einer Außenwand 81 aus abgewinkelten Metallblechen, die einen kern 20 umgeben. Zur Fixierung der Innenwand 80 und der Außenwand 81 an dem Kern 20 ist ein Einsteckteil 82 vorgesehen, das mit einem Rastelement 83, insbesondere einem Stift mit einem Rastkopf, in eine Aufnahme an dem Kern 20 einsteckbar ist. Durch das Einsteckteil 82 können die Innenwand und die Außenwand 81 nach Art eines Keders fixiert werden. Hierfür kann die Innenwand 80 und die Außenwand 81 zumindest teilweise mit einem Endabschnitt in die Aufnahme an dem Kern 20 eingreifen und durch das Einsteckteil 82 formschlüssig oder kraftschlüssig fixiert werden.

Die dargestellten Ausführungsbeispiele können beliebig kombiniert werden. Beispielsweise kann der Kern 20 nur ein Verstärkungselement 40 oder 41 aufweisen oder mehr als die dargestellten Verstärkungselemente 40 und 41. Die Verstärkung muss sich nicht durch die Formteile erstrecken, sondern kann auch an einer Oberfläche der Formteile fixiert sein, beispielsweise durch Verkleben.

Die Formteile 21, 24 und 30 sind über Nut-Feder-Verbindungen formschlüssig aneinander gehalten. Es ist natürlich auch möglich, andere Formschlussverbindungen, beispielsweise Schwalbenschwanzverbindungen, Hakenverbindungen oder andere Steck- oder Schwenkverbindungen, vorzusehen.

Die Formteile 21, 24 und 30 sind aus Kunststoff im Spritzgussverfahren hergestellt. Je nach Länge der Seitenzarge können mehr oder weniger mittlere Formteile 24 zwischen dem Formteil 21 und dem rückseitigen Formteil 30 eingesetzt werden.

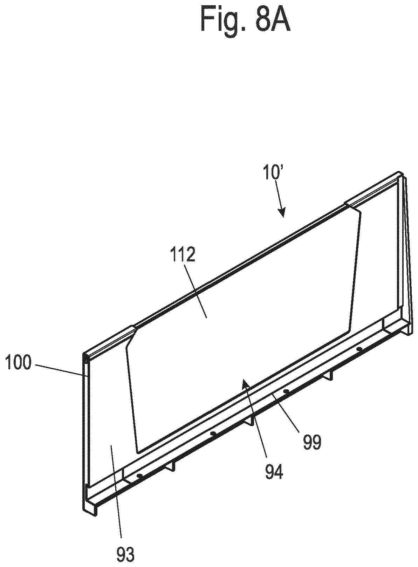

In den Figuren 8A bis 8C ist ein weiteres Ausführungsbeispiel einer Seitenzarge 10' gezeigt, die ein vorderes Formteil 90, ein mittleres Formteil 91 und ein hinteres Formteil 92 aufweist. Das mittlere Formteil 91 weist eine geringere Höhe in vertikaler Seitenzargenlängsrichtung als die Formteile 90 und 92 auf. Auf das mittlere Formteil wird ein Wandelement aus Glas oder einem anderen optisch ansprechenden Material aufgesetzt und bleibt von außen sichtbar. Hierfür ist eine innere Umhüllung an der Innenseite der Seitenarge vorgesehen, die einen vorderen Steg 93 und einen hinteren Steg 95 aufweist, zwischen denen eine Aussparung 94 ausgebildet ist, in der das Wandelement aus Glas sichtbar bleibt. Das vordere Formteil 90 und das hintere Formteil 92 sind über das mittlere Formteil 91 miteinander verbunden, an dem eine Nut zur Aufnahme eines Bodens für den Schubkasten vorgesehen ist. Der Steg 93 überdeckt dabei das vordere Formteil 90 und steht über dieses in Zargenlängsrichtung hervor, so dass das Wandelement aus Glas teilweise durch den Steg 93 und den hinteren Steg 95 überdeckt ist und dadurch das Wandelement 112 in vertikaler Richtung zur Seitenzargenlängsrichtung gehalten wird. Auf ähnliche Weise wird an der Außenseite der Zarge eine äußere Umhüllung 100 mit zwei Stegen 103 und 104 vorgesehen, die optional auch mit den Stegen 93 und 95 verbunden sind, wobei an dem vorderen Steg 103 eine U-förmige Kante 101 angeformt ist, die eine Oberseite des Formteils 90 übergreift. Zudem wird ein Endabschnitt des Wandelements 112 übergriffen, so dass das Wandelement 91 durch die Umhüllungen gehalten ist. Das vordere Formteil 90 und das hintere Formteil 92 sind mit dem Wandelement aus Glas in einer Ebene angeordnet und bilden in Richtung der inneren und äußeren Umhüllung nahezu plane Anlageflächen aus.

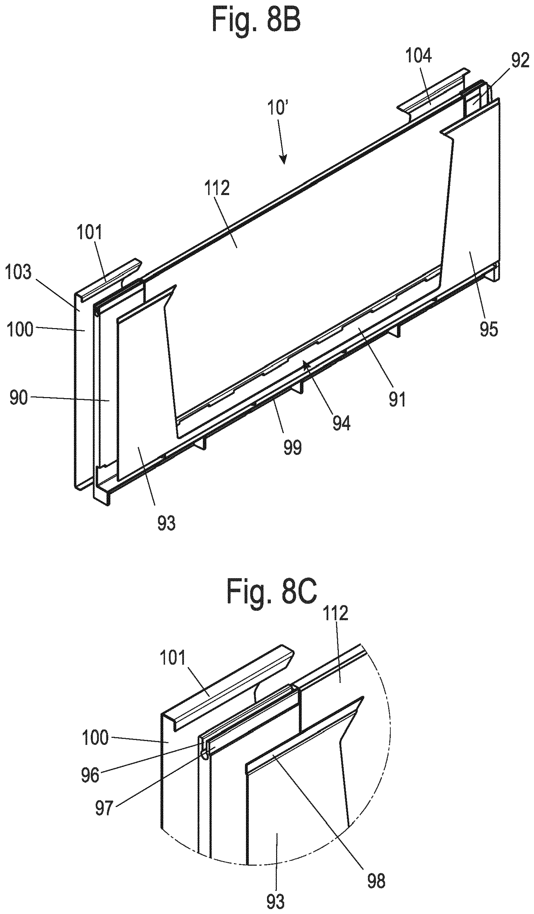

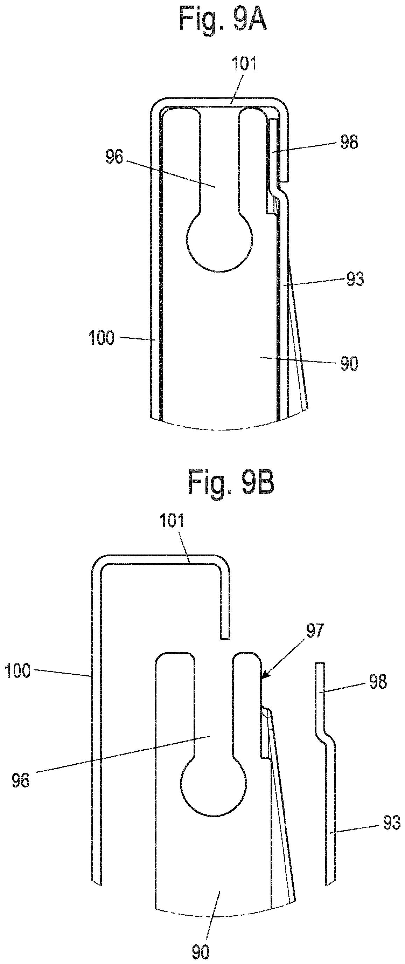

An den Formteilen 90 und 92 ist an einer Oberseite eine Nut 96 ausgebildet, die zur Montage weiterer Bauteile, beispielsweise Abdeckleisten oder Aufsatzzargen, eingesetzt werden kann. In dem Ausführungsbeispiel der Figuren 8 und 9 ist die Nut 96 allerdings nicht belegt.

Wie die Figuren 9A und 9B zeigen, wird zur Montage das Formteil 90 vorgesehen, bevor die innere Umhüllung mit dem Steg 93 und die äußere Umhüllung 100 mit der U-förmigen Kante 101 montiert werden. An dem Steg 93 ist eine stufenförmige Kante 98 ausgebildet, die in eine entsprechende Aufnahme 97 an dem Formteil 90 eingreift, so dass die innere Umhüllung mit dem Steg 93 formschlüssig an dem Formteil 90 gehalten ist. Die gestufte Kante 98 wird dann durch die U-förmige Kante 101 der äußeren Umhüllung 100 überdeckt, wobei die Umhüllungen optional auch miteinander verklebt werden können.

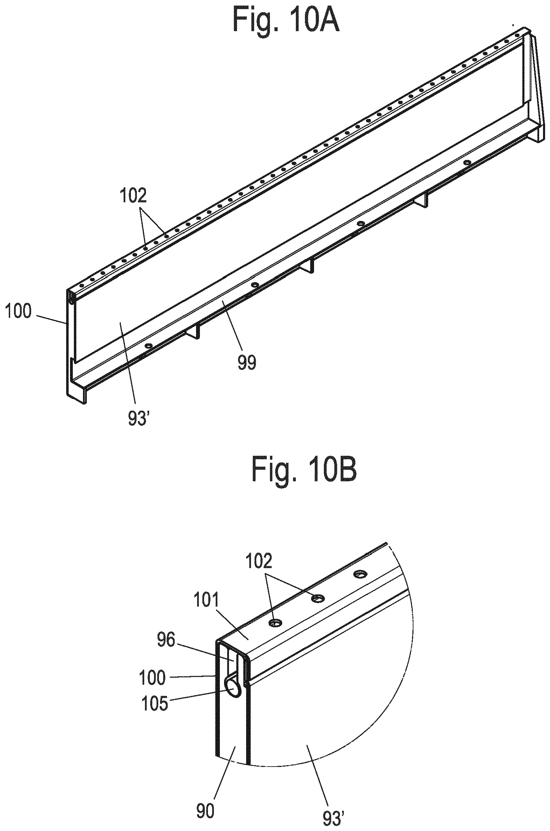

In den Figuren 10A und 10B ist ein modifiziertes Ausführungsbeispiel einer Seitenzarge gezeigt, bei der eine innere Umhüllung 93' keine Aussparung 94 aufweist, und im Inneren mehrere Formteile 90 vorgesehen sind, wie dies vorstehend schon erläutert wurde. An der Außenseite ist eine äußere Umhüllung 100 vorgesehen, die mit einer U-förmigen Kante 101 die Formteile 90 an einer Oberseite umgreift. In den Formteilen 90 ist eine Nut 96 ausgespart, in die ein Lichtleiter 105 eingelegt ist. In den Lichtleiter 105 wird Licht eingestrahlt, beispielsweise über eine LED, die in der Seitenzarge, der Rückwand oder der Frontblende angeordnet ist. In der U-förmigen Kante 101 sind mehrere Öffnungen 102 ausgespart, so dass Licht über den Lichtleiter 105 durch die Öffnungen 102 abgestrahlt werden kann, was einen optisch ansprechenden Effekt ergibt.

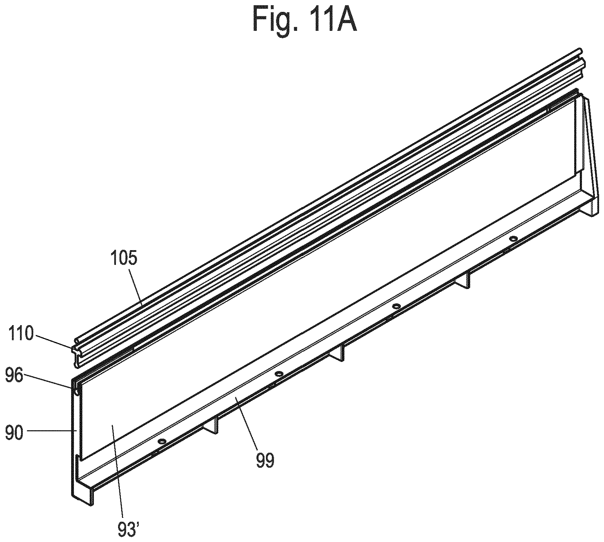

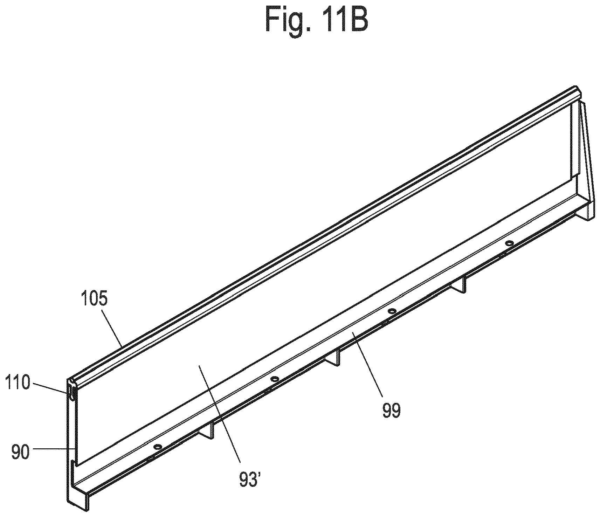

In Figur 11A und 11B ist ein gegenüber Figur 10 modifiziertes Ausführungsbeispiel gezeigt, bei dem in die Nut 96 an den Formteilen 90 ein Einsteckteil 110 eingefügt wird, an dessen Oberseite ein Lichtleiter 105 angeordnet ist. Der stabförmige Lichtleiter 105 bleibt nach der Montage von außen sichtbar und kann zur Verteilung von Licht dienen, das in eine Stirnseite des Lichtleiters 105 eingestrahlt wird. Die innere Umhüllung 93' erstreckt sich bis kurz unterhalb des Lichtleiters 105, und auch die äußere Umhüllung überdeckt den Lichtleiter 105 nicht.

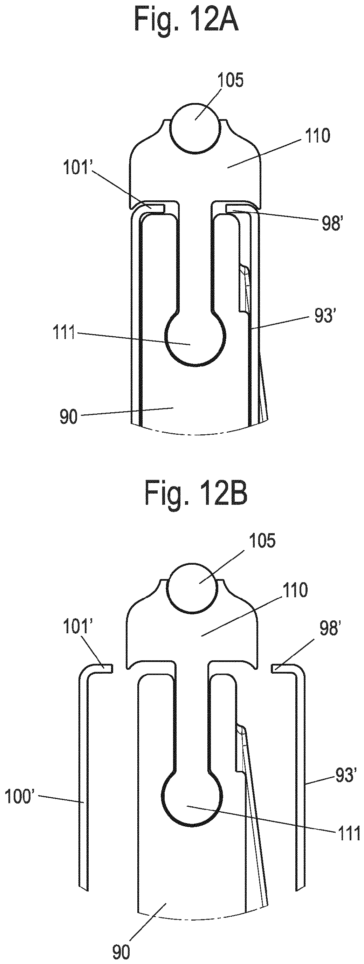

Wie in den Figuren 12A und 12B gezeigt, kann die innere Umhüllung 93' an der Oberseite eine gebogene Kante 98' und die äußere Umhüllung eine gebogene Kante 101 aufweisen, die zwischen einer Oberseite des Formteils und einem verdickten Kopfabschnitt des Einsteckteils 110 eingefügt werden. Somit können über das Einsteckteil 110 die Umhüllungen 93' und 100' in Position gehalten werden. Das Einsteckteil 110 weist einen verdickten Fußabschnitt 111 auf, der in eine entsprechende Verbreiterung der Nut 96 eingefügt ist. An der Oberseite des Einsteckteils 110 ist der Lichtleiter 105 fixiert, insbesondere verklebt oder klemmend festgelegt.

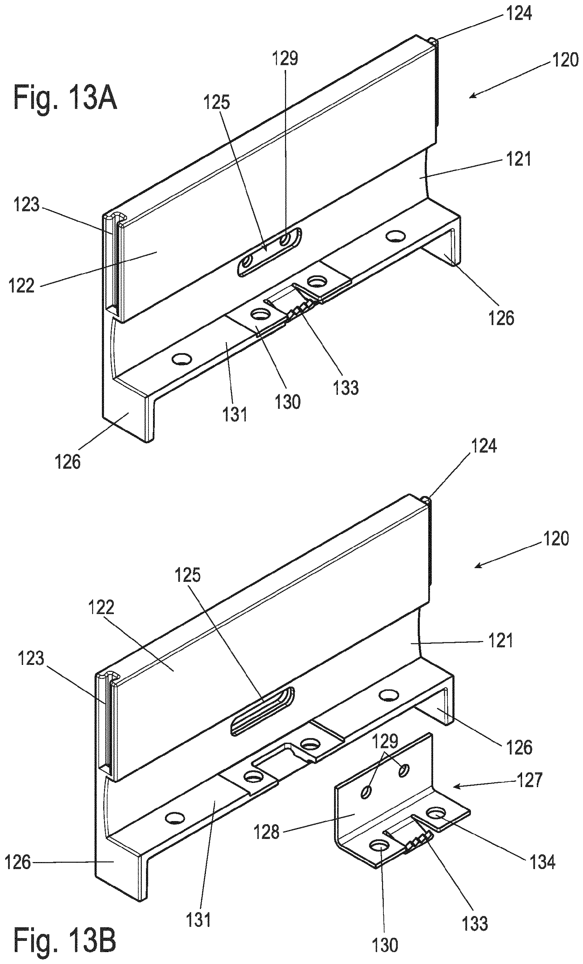

In den Figuren 13A und 13B ist ein modifiziertes Formteil aus Kunststoff für eine Seitenzarge gezeigt, wobei die metallische Umhüllung weggelassen wurde. Die Seitenzarge umfasst mindestens einem Formteil 120 mit einer Nut 121 zur Aufnahme eines Bodens des Schubkastens. Vorzugsweise erstrecken sich die Formteile 120 über die gesamte Länge der Seitenzarge. Oberhalb der Nur ist ein Wandelement 122 vorgesehen, das in Längsrichtung der Seitenzarge auf einer Stirnseite eine Nut 123 aufweist, in die eine hervorstehende Feder 124 eines benachbarten Formteils 120 eingesteckt werden kann. Dadurch können mehrere Formteile 120 formschlüssig über die gesamte Länge einer Seitenzarge ineinander gesteckt werden.

In einem Boden der Nut 121 ist eine Öffnung 125 vorgesehen, die zur Fixierung eines Metallwinkels 127 dient. Der Metallwinkel 127 umfasst einen vertikalen Schenkel 128 mit Montageöffnungen 129, die in der montierten Position innerhalb der Öffnung 125 angeordnet sind. An einem unteren horizontalen Schenkel 131 der Nut 121 ist eine Aufnahme ausgebildet, in die ein zweiter Schenkel 130 des Metallwinkels 127 eingefügt ist. An dem zweiten Schenkel 130 ist eine Kralle 133 mit nach oben ragenden Zähnen ausgebildet die von zwei Stegen mit Montageöffnungen 134 umgeben ist. Um einen Boden des Schubkastens zu fixieren, kann dieser randseitig in die Nut eingeschoben und kraftschlüssig fixiert werden, wobei die Kralle 133 sich an einer Unterseite des Bodens in diesen eingräbt. Die Klemmkräfte auf die Krall 133 verteilen sich dann auf den horizontalen Schenkel 131, der an gegenüberliegenden Enden durch nach unten ragende Stege 126 abstützbar ist. Die Oberseite des zweiten Schenkels 130 und die Oberseite des horizontalen Schenkel 131 können zu Stützung des Bodens im Wesentlichen flächenbündig ausgerichtet sein.

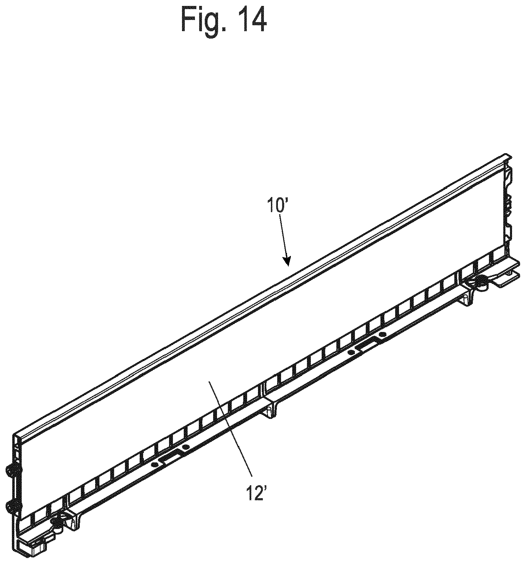

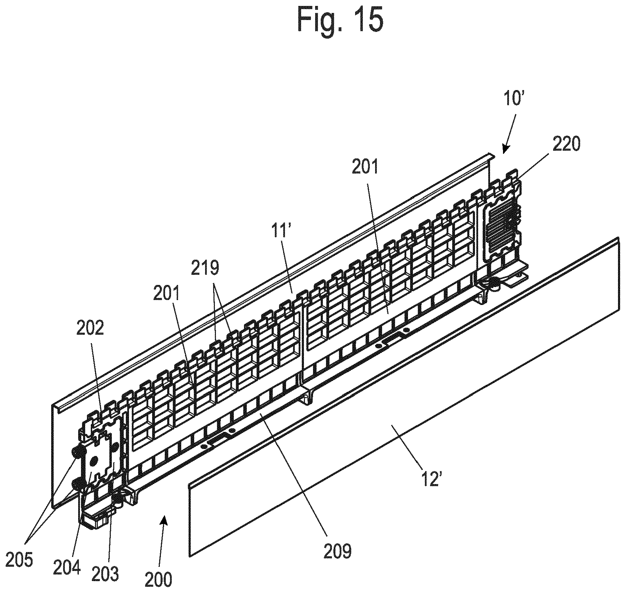

In den Figuren 14 und 15 ist eine modifizierte Seitenzarge 10' für einen Schubkasten 1 dargestellt. Die Seitenzarge 10' umfasst eine Umhüllung, die aus zwei gebogenen Metallblechen 11' und 12' hergestellt ist und einen inneren Kern umgibt, der ein oder mehrere mittlere Formteile 201, ein zur Frontblende gewandtes endseitiges Formteil 202 und ein zur Rückwand gewandtes endseitiges Formteil 220 umfasst. Die mittleren Formteile 201 können dabei aus Kunststoff im Spritzgussverfahren hergestellt sein und umfassen eine Gitterstruktur, so dass, bezogen auf das Volumen des Formteils 201, nur wenig Material benötigt wird. Unter dem Metallblech 12' ist an den Formteilen 201, 202 und 220 eine Nut 209 zum Einfügen eines Randes eines Bodens des Schubkastens ausgebildet. An den Formteilen 201, 202 und 220 befinden sich an einer Oberseite eine Vielzahl nach oben ragender Stege 219, an denen die beiden Metallbleche 11' und 12' der Umhüllung festlegbar sind, wobei die Art der Befestigung auch entsprechend einem der vorangegangenen Ausführungsbeispiele ausgestaltet sein kann.

Das zur Frontblende gewandte Formteil 202 ist mit einer Aussparung oder Aufnahme versehen, in die ein Befestigungselement 203 eingefügt ist. Das Befestigungselement 203 ist dabei an mindestens drei Seiten, vorzugsweise an mindestens vier Seiten, von dem Formteil 202 umgeben. Das Befestigungselement 203 umfasst ein Verstellelement 204, das relativ zu dem Befestigungselement 203 verstellbar ist. An dem Verstellelement 204 sind Befestigungsmittel 205 zur Fixierung der Frontblende vorgesehen, wobei die Befestigungsmittel 205 in dem dargestellten Ausführungsbeispiel als Zapfen ausgebildet sind, die in entsprechende Bohrungen oder Öffnungen an der Frontblende eingesteckt werden.

Zudem ist an dem Formteil 202 eine Höhenverstellung vorgesehen, wobei ein Montageteil 207 im unteren Bereich des Formteils 202 festlegbar ist, an dem eine Kurvenführung ausgebildet ist, die mit einem Hebel 206 zusammenwirkt, der bei einer Drehbewegung die Position der Frontblende relativ zu dem Boden verstellen kann.

Das benachbart zur Frontblende angeordnete Formteil 202 kann baugleich ausgebildet sein wie ein an der gegenüberliegenden Seitenzarge angeordnetes Formteil, das der Rückwand zugewandt ist. Das zur Rückblende zugewandte Formteil 220 an derselben Seitenzarge ist spiegelsymmetrisch ausgebildet zu einer mittleren Ebene senkrecht zur Längsrichtung der Seitenzarge. An dem Formteil 220 ist ein modifiziertes Befestigungselement 221 in die Aufnahme eingefügt, das im Wesentlichen formschlüssig an dem Formteil 220 gehalten ist und zur Fixierung der Seitenzarge an der Rückwand dient.

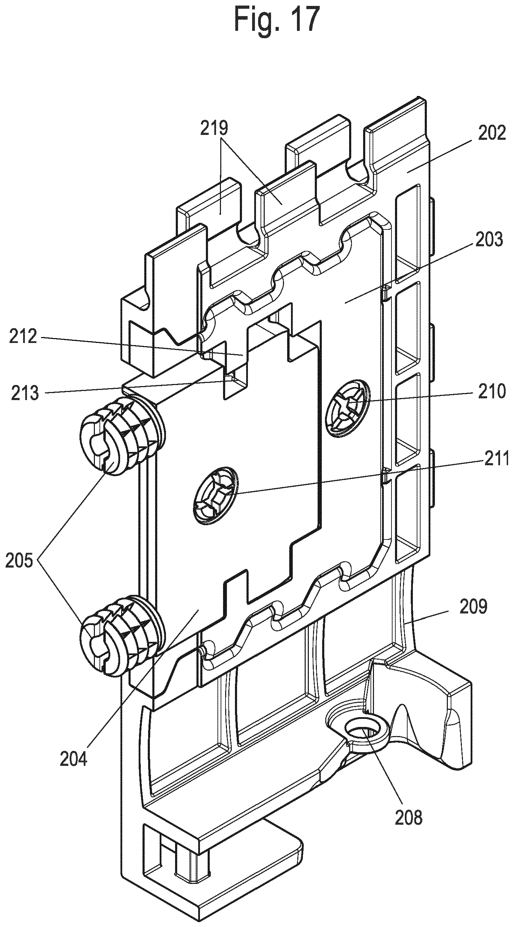

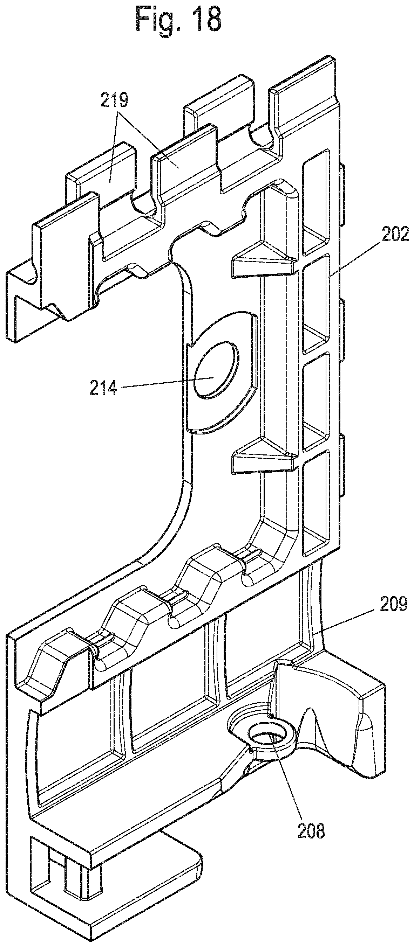

In Figur 17 ist das zur Frontblende benachbarte Formteil 202 mit dem Befestigungselement 203 im Detail dargestellt. An dem Befestigungselement 203 befindet sich ein drehbarer Exzenter 210, der in einer Öffnung 214 an einem Wandabschnitt des Formteils 202 (Figur 18) drehbar gelagert ist. Über den Exzenter 210 kann das Verstellelement 204 relativ zu dem Befestigungselement 203 in der Höhe verstellt werden. Hierfür ist das Verstellelement 204 mit vertikalem Spiel innerhalb des Befestigungselementes 203 aufgenommen, wobei zur Führung ein oder mehrere Stege 212 an dem Befestigungselement 203 ausgebildet sind, die in entsprechende Aussparungen 213 oder Führungsaufnahmen eingreifen.

An dem Befestigungselement 203 ist ferner eine Seitenverstellung 211 vorgesehen die an dem Verstellelement 204 angeordnet ist. Über die Seitenverstellung 211 kann die Position des Verstellelementes 204 in eine Richtung horizontal und senkrecht zur Längsrichtung der Seitenzarge verändert werden.

An dem Formteil 202 befindet sich ferner eine Nut 209 zur Aufnahme eines Randes des Bodens des Schubkastens, wobei die Position des Bodens über eine Höhenverstellung verändert werden kann. Die Höhenverstellung mit dem Hebel 206 ist dabei an einer Öse 208 drehbar gelagert.

In Figur 18 ist das Formteil 202 ohne das Befestigungselement 203 dargestellt, und es ist erkennbar, dass das Befestigungselement 203 U-förmig umschlossen ist und an einer vierten Seite an einem Wandabschnitt zumindest teilweise anliegt.

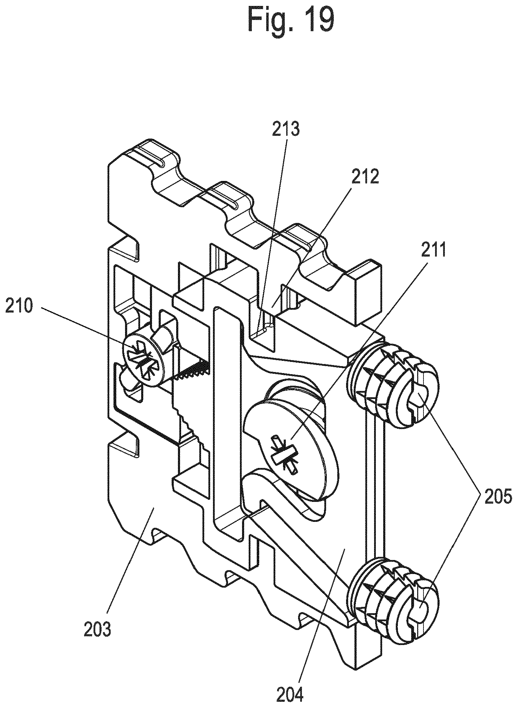

In Figur 19 ist das Befestigungselement 203 gezeigt, und es ist der Exzenter 210 erkennbar, mittels dem das Verstellelement 204 in der Höhe relativ zu dem Befestigungselement 203 verstellbar ist. Ferner ist die Seitenverstellung 211 zu sehen, die eine Positionierung des Verstellelementes 204 in eine Richtung senkrecht zur Ebene der Seitenzarge ermöglicht. An dem Verstellelement 204 sind zwei Zapfen als Befestigungsmittel 205 zur Festlegung der Frontblende ausgebildet.

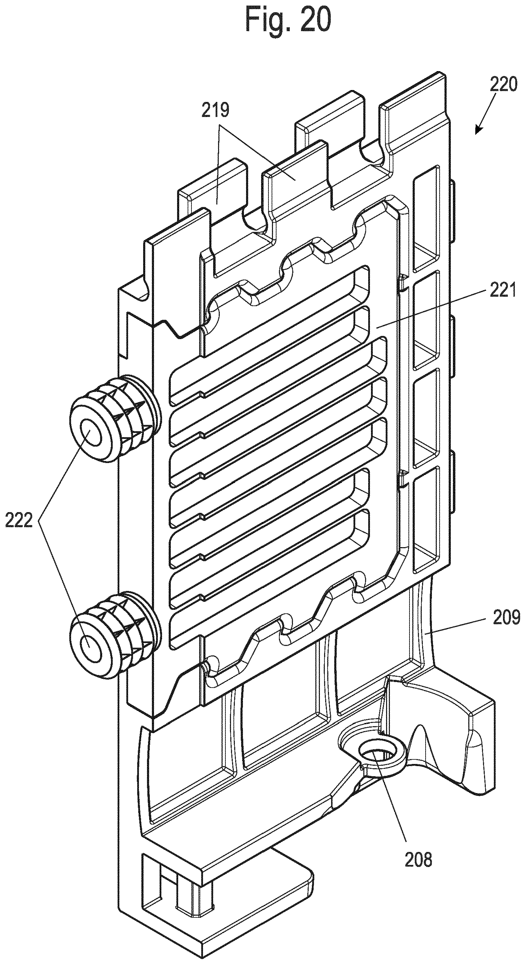

In Figur 20 ist das rückwärtige Formteil 220 gezeigt, das am oberen Rand Stege 219 aufweist und eine Aufnahme oder Aussparung besitzt, die wie bei dem vorderen Formteil 202 ausgebildet ist und nur nach hinten offen ist. In die Aufnahme ist ein Befestigungselement 221 als Formteil eingefügt, das formschlüssig und unverschieblich an dem Formteil 220 gehalten ist. An dem Befestigungselement 221 sind zwei Zapfen 222 angeformt, die zur Fixierung einer Rückwand dienen. Das Formteil 220 umfasst ferner eine Nut zur Aufnahme des Randes des Bodens und eine Öse 208 zur Montage einer Höhenverstellung.

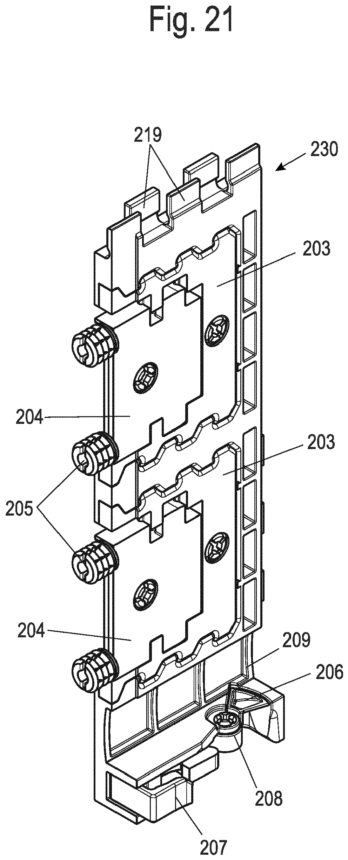

In Figur 21 ist ein modifiziertes Formteil 230 dargestellt, das höher ausgebildet ist als die zuvor beschriebenen Formteile 202 und 220, wobei in dem Formteil 230 zwei Aufnahmen oder Aussparungen ausgebildet sind, in die jeweils ein Befestigungselement 203 eingefügt ist. Die beiden Befestigungselemente 203 sind dabei übereinander angeordnet, so dass das Formteil 230 für hohe Seitenzargen einsetzbar ist. Im Übrigen ist die Gestaltung des Befestigungselementes 203 mit den darin verstellbar gehaltenen Verstellelementen 204 wie bei den vorangegangenen Ausführungsbeispielen ausgebildet. Im unteren Bereich des Formteils 230 ist ferner eine Höhenverstellung mit dem Montageteil 207 und dem Hebel 206 dargestellt, der den Boden relativ zu dem Formteil 230 verstellen kann.

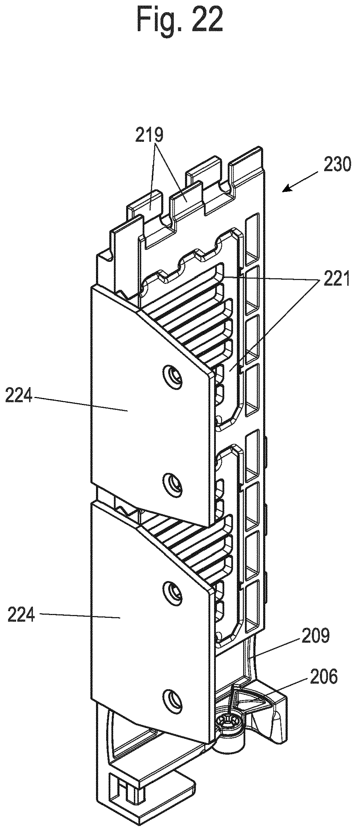

In Figur 22 ist das Formteil 230 nicht mit den Befestigungselementen 203, sondern mit modifizierten Befestigungselementen 221 gefüllt, die formschlüssig an dem Formteil 230 fixiert sind. Dabei sind zwei Befestigungselemente 221 übereinander vorgesehen, an denen abgewinkelte Stege 224 gehalten sind, die zur Montage einer Rückwand dienen.

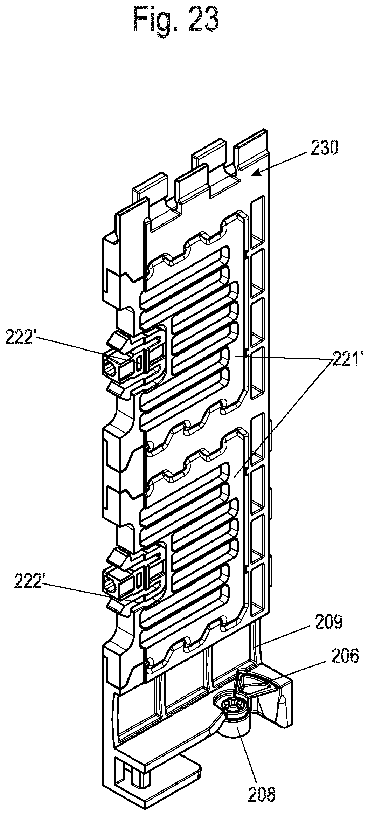

In Figur 23 ist das Formteil 230 mit zwei modifizierten Befestigungselementen 221' dargestellt, bei denen statt einem Zapfen 205 oder einem abgewinkelten Steg 224 ein Rastelement 222' vorgesehen ist, um eine Rückwand zu fixieren. Die Rastelemente 222' können beispielsweise in eine Öffnung an einer Rückwand zum Verrasten der Rückwand eingefügt werden.

Wie die Figuren 21 bis 23 zeigen, kann ein und dasselbe Formteil 230 durch Einsatz unterschiedlicher Befestigungselemente 203, 221 oder 221' zur Montage unterschiedlicher Rückwände eingesetzt werden. Dieselben Variationen können natürlich auch an der Vorderseite zur Fixierung der Frontblende vorgenommen werden.

### Bezugszeichenliste

- 1: Schubkasten
- 2: Boden
- 3: Rückwand
- 10, 10': Seitenzarge
- 11, 11': Metallblech
- 12, 12': Metallblech
- 13: Kante
- 14: Abwinklung
- 15: Steg
- 16: Stufe
- 17: Steg
- 19: Aussparung
- 20: Kern
- 21: Formteil
- 22: Steg
- 23: Zapfen
- 24: Formteil
- 25: Steg
- 26: Feder
- 27: Nut
- 28: Aufnahme
- 29: Öffnung
- 30: Formteil
- 31: Steg
- 32: Öffnung
- 33: Öffnung
- 40: Verstärkungselement
- 41: Verstärkungselement
- 42: Vorsprung
- 43: Öffnung
- 50: Metallblech
- 51: Metallblech
- 52: Profil
- 55: Umhüllung
- 60: Metallblech
- 61: Metallblech
- 70: Umhüllung
- 71: Abwinklung
- 80: Innenwand
- 81: Außenwand
- 82: Einsteckteil
- 83: Rastelement
- 90: Formteil
- 91: Formteil
- 92: Formteil
- 93: Steg
- 93': Umhüllung
- 94: Aussparung
- 95: Steg
- 96: Nut
- 97: Aufnahme
- 98, 98': Kante
- 99: Steg
- 100: Umhüllung
- 100': Umhüllung
- 101: Kante
- 102: Öffnung
- 103: Steg
- 104: Steg
- 105: Lichtleiter
- 110: Einsteckteil
- 111: Fußabschnitt
- 112: Wandelement
- 120: Formteil
- 121: Nut
- 122: Wandelement
- 123: Nut
- 124: Feder
- 125: Öffnung
- 126: Steg
- 127: Metallwinkel
- 128: vertikaler Schenkel
- 129: Montageöffnung
- 130: Steg
- 131: horizontaler Schenkel
- 133: Kralle
- 201: Formteil
- 202: Formteil
- 203: Befestigungselement
- 204: Verstellelement
- 205: Befestigungsmittel
- 206: Hebel
- 207: Montageteil
- 208: öse
- 209: Nut
- 210: Exzenter
- 211: Seitenverstellung
- 212: Steg
- 213: Aussparung
- 214: Öffnung
- 219: Steg
- 220: Formteil
- 221, 221': Befestigungselement
- 222: Zapfen
- 222': Rastelement
- 224: Steg
- 230: Formteil

## Patentansprüche

1. Schubkasten (1) mit zwei Seitenzargen (10), einem Boden (2), einer Rückwand (3) und einer Frontblende, wobei mindestens eine Seitenzarge (10) eine dünnwandige Umhüllung (11, 12) aufweist, die durch einen inneren Kern (20) abgestützt ist, wobei der innere Kern (20) mindestens zwei Formteile (21, 24, 30, 90, 91, 92, 120, 202, 220, 230) aufweist, die formschlüssig aneinander gehalten sind, **dadurch gekennzeichnet, dass** an mindestens einem Formteil (120) eine Nut (121) zur Aufnahme eines Bodens des Schubkastens ausgebildet ist.

2. Schubkasten nach Anspruch 1, **dadurch gekennzeichnet, dass** der innere Kern (20) mindestens drei Formteile (21, 24, 30) aufweist, die formschlüssig aneinander gehalten sind.

3. Schubkasten nach Anspruch 1 oder 2, **dadurch gekennzeichnet, dass** die Formteile (21, 24, 30, 202, 220, 230) sich im Wesentlichen über die gesamte Länge der Umhüllung (11, 12) erstrecken.

4. Schubkasten nach einem der vorhergehenden Ansprüche, **dadurch gekennzeichnet, dass** ein erstes Formteil (21) mit Befestigungsmitteln (23), insbesondere hervorstehenden Zapfen, zur Fixierung der Frontblende versehen ist.

5. Schubkasten nach einem der vorhergehenden Ansprüche, **dadurch gekennzeichnet, dass** ein zweites Formteil (30) Befestigungsmittel (31) für die Rückwand (3) aufweist.

6. Schubkasten nach einem der vorhergehenden Ansprüche, **dadurch gekennzeichnet, dass** die Formteile (21, 24, 30) als Spritzgussteile hergestellt sind.

7. Schubkasten nach einem der vorhergehenden Ansprüche, **dadurch gekennzeichnet, dass** die Formteile (21, 24, 30) über Nut-Feder-Verbindungen (26, 27) ineinander steckbar sind.

8. Schubkasten nach einem der vorhergehenden Ansprüche, **dadurch gekennzeichnet, dass** die Umhüllung (11, 12) mit den Formteilen (21, 24, 30) verklebt ist.

9. Schubkasten nach einem der vorhergehenden Ansprüche, **dadurch gekennzeichnet, dass** die Formteile (21, 24, 30) im Wesentlichen plattenförmig ausgebildet sind und einen seitlich hervorstehenden Steg (22, 25) als Auflager für den Boden (2) aufweisen.

10. Schubkasten nach einem der vorhergehenden Ansprüche, **dadurch gekennzeichnet, dass** die Umhüllung (11, 12) aus einem oder mehreren Metallblechen, insbesondere Stahlblechen, gebildet ist, wobei die Metallbleche bevorzugt eine Dicke kleiner 0,8 mm, insbesondere kleiner 0,5 mm, aufweisen.

11. Schubkasten nach einem der vorhergehenden Ansprüche, **dadurch gekennzeichnet, dass** in oder an den Formteilen (21, 24, 30) eine Verstärkung (40, 41) aus einem formstabilen Material, insbesondere Metall oder Kunststoff, vorgesehen ist.

12. Schubkasten nach einem der vorhergehenden Ansprüche, **dadurch gekennzeichnet, dass** die Seitenzargen (10) eine Dicke kleiner 10 mm, insbesondere kleiner 8 mm, aufweisen.

13. Schubkasten nach einem der vorhergehenden Ansprüche, **dadurch gekennzeichnet, dass** die Umhüllung (11, 12) zumindest teilweise Dekorelemente aus Holz aufweist.

14. Schubkasten nach einem der vorhergehenden Ansprüche, **dadurch gekennzeichnet, dass** der innere Kern mindestens zwei Formteile (90, 91) mit unterschiedlichen Höhen in vertikaler Richtung zur Seitenzargenlängsrichtung aufweist.

15. Schubkasten nach einem der vorhergehenden Ansprüche, **dadurch gekennzeichnet, dass** an oder in den Formteilen der Seitenzarge ein Lichtleiter oder Leuchtmittel (105) vorgesehen ist.

16. Schubkasten nach einem der vorhergehenden Ansprüche, **dadurch gekennzeichnet, dass** in der Nut eine Aufnahme mit einer Kralle (133) aus metallischem Material zur Fixierung des Bodens vorgesehen ist.

17. Schubkasten nach einem der vorhergehenden Ansprüche, **dadurch gekennzeichnet, dass** ein endseitig benachbart zu der Frontblende oder der Rückwand (3) angeordnetes Formteil (202, 220, 230) eine Aufnahme aufweist, in die ein Befestigungselement (203, 221, 221') zur Fixierung der Frontblende oder der Rückwand (3) an dem endseitigen Formteil (202, 220, 230) eingefügt ist, wobei das Befestigungselement (203, 221, 221') bevorzugt relativ zu dem Formteil (202, 220, 230) über einen Verstellmechanismus (206, 210, 221) verschiebbar oder verschwenkbar gelagert ist.

## Claims

1. Drawer (1) having two side frames (10), a bottom (2), a rear wall (3) and a front panel, wherein at least one side frame (10) has a thin-walled casing (11, 12) which is supported by an inner core (20), wherein the inner core (20) has at least two shaped parts (21, 24, 30, 90, 91, 92, 120, 202, 220, 230), which are held together in a form-fitting manner, **characterized in that** a groove (121) for receiving a bottom of the drawer is formed on at least one shaped part (120).

2. Drawer according to claim 1, **characterized in that** the inner core (20) has at least three shaped parts (21, 24, 30) which are held together in a form-fitting manner.

3. Drawer according to claim 1 or 2, **characterized in that** the shaped parts (21, 24, 30, 202, 220, 230) extend substantially over the entire length of the casing (11, 12).

4. Drawer according to one of the preceding claims, **characterized in that** a first shaped part (21) is provided with fastening means (23), in particular protruding pins, for fixing the front panel.

5. Drawer according to one of the preceding claims, **characterized in that** a second shaped part (30) comprises fastening means (31) for the rear wall (3).

6. Drawer according to one of the preceding claims, **characterized in that** the shaped parts (21, 24, 30) are produced as injection-molded parts.

7. Drawer according to one of the preceding claims, **characterized in that** the shaped parts (21, 24, 30) can be plugged into one another via tongue-and-groove connections (26, 27).

8. Drawer according to one of the preceding claims, **characterized in that** the casing (11, 12) is glued to the shaped parts (21, 24, 30).

9. Drawer according to one of the preceding claims, **characterized in that** the shaped parts (21, 24, 30) are essentially formed in a plate-shaped manner and have a laterally projecting web (22, 25) as support for the bottom (2).

10. Drawer according to one of the preceding claims, **characterized in that** the casing (11, 12) is formed of one or more metal sheets, in particular steel sheets, wherein the metal sheets have a thickness of less than 0.8 mm, in particular less than 0.5 mm.

11. Drawer according to one of the preceding claims, **characterized in that** a reinforcement (40, 41) made of a dimensionally stable material, in particular metal or plastic, is provided in or on the shaped parts (21, 24, 30).

12. Drawer according to one of the preceding claims, **characterized in that** the side frames (10) have a thickness of less than 10 mm, in particular less than 8 mm.

13. Drawer according to one of the preceding claims, **characterized in that** the casing (11, 12) comprises at least partially decorative elements of wood.

14. Drawer according to one of the preceding claims, **characterized in that** the inner core has at least two shaped parts (90, 91) with different heights in the vertical direction relative to the longitudinal direction of the side frame.

15. Drawer according to one of the preceding claims, **characterized in that** a light guide or lighting means (105) is provided on or in the shaped parts of the side frame.

16. Drawer according to one of the preceding claims, **characterized in that** a receptacle with a claw (133) of metallic material for fixing the bottom is provided in the groove.

17. Drawer according to one of the preceding claims, **characterized in that** a shaped part (202, 220, 230) arranged at the end adjacent to the front panel or the rear wall (3) has a receptacle into which a fastening element (203, 221, 221') is inserted for fixing the front panel or the rear wall (3) to the shaped part (202, 220, 230) at the end, wherein the fastening element (203, 221, 221') is mounted displaceably or pivotably relative to the shaped part (202, 220, 230) via an adjustment mechanism (206, 210, 221).

## Revendications

1. Tiroir (1) comportant deux châssis latéraux (10), un fond (2), un dos (3) et une façade,
- au moins un châssis latéral (10) comprenant une enveloppe à parois minces (11, 12) soutenue par un noyau intérieur (20),
- le noyau intérieur (20) comprenant au moins deux pièces de forme (21, 24, 30, 90, 91, 92, 120, 202, 220, 230), tenues les unes aux autres par une liaison par la forme,
tiroir **caractérisé en ce que**
au moins une pièce de forme (120) comporte une rainure (121) pour recevoir le fond du tiroir.

2. Tiroir selon la revendication 1,
**caractérisé en ce que**
le noyau intérieur (20) comporte au moins trois pièces de forme (21, 24, 30) qui sont tenues les unes aux autres par une liaison par la forme.

3. Tiroir selon la revendication 1 ou 2,
**caractérisé en ce que**
les pièces de forme (21, 24, 30, 202, 220, 230) s'étendent pratiquement sur toute la longueur de l'enveloppe (11, 12).

4. Tiroir selon l'une des revendications précédentes,
**caractérisé en ce qu'**
une première pièce de forme (21) est munie de moyens de fixation (23), notamment des broches venant en saillie pour fixer la façade.

5. Tiroir selon l'une des revendications précédentes,
**caractérisé en ce qu'**
une seconde pièce de forme (30) comporte des moyens de fixation (31) pour le dos (3).

6. Tiroir selon l'une des revendications précédentes,
**caractérisé en ce que**
les pièces de forme (21, 24, 30) sont des pièces injectées.

7. Tiroir selon l'une des revendications précédentes,
**caractérisé en ce que**
les pièces de forme (21, 24, 30) sont assemblées les unes aux autres par des liaisons à languette et rainure (26, 27).

8. Tiroir selon l'une des revendications précédentes,
**caractérisé en ce que**
l'enveloppe (11, 12) est collée aux pièces de forme (21, 24, 30).

9. Tiroir selon l'une des revendications précédentes,
**caractérisé en ce que**
les pièces de forme (21, 24, 30) sont pratiquement des plaques et ont une entretoise latéralement en saillie (22, 25) comme appui pour le fond (2).

10. Tiroir selon l'une des revendications précédentes,
**caractérisé en ce que**
l'enveloppe (11, 12) est formée d'une ou plusieurs pièces en métal, notamment en tôle d'acier, et
les tôles métalliques ont, de préférence, une épaisseur inférieure à 0,8 mm, notamment inférieure à 0,5 mm.

11. Tiroir selon l'une des revendications précédentes,
**caractérisé en ce que**
un renfort (40, 41) en une matière de forme stable, notamment en métal ou en matière plastique est prévu dans ou sur les pièces de forme (21, 24, 30).

12. Tiroir selon l'une des revendications précédentes,
**caractérisé en ce que**
les châssis latéraux (10) ont une épaisseur inférieure à 10 mm, notamment inférieure à 8 mm.

13. Tiroir selon l'une des revendications précédentes,
**caractérisé en ce que**
l'enveloppe (11, 12) comporte au moins en partie des éléments de décor en bois.

14. Tiroir selon l'une quelconque des revendications précédentes, **caractérisé en ce que**
le noyau intérieur comprend au moins deux pièces de forme (90, 91) ayant des hauteurs différentes dans la direction verticale par rapport à la direction longitudinale des châssis latéraux.

15. Tiroir selon l'une des revendications précédentes,
**caractérisé en ce qu'**
un guide de lumière ou un moyen d'éclairage (105) est prévu sur ou dans les pièces de forme du châssis latéral.

16. Tiroir selon l'une quelconque des revendications précédentes, **caractérisé en ce qu'**
un logement avec une griffe (133) en métal est prévu dans un logement pour la fixation du fond.

17. Tiroir selon l'une quelconque des revendications précédentes, **caractérisé en ce qu'**
une pièce de forme (202, 220, 230) prévue en extrémité au voisinage de la façade ou du dos (3) comporte un logement dans lequel s'engage un élément de fixation (203, 221, 221') pour fixer la façade ou le dos (3) à la pièce de forme d'extrémité (202, 220, 230),
* l'élément de fixation (203, 221, 221') étant monté coulissant ou pivotant de préférence par rapport à la pièce de forme (202, 220, 230) par l'intermédiaire d'un mécanisme de réglage (206, 210, 221).
